# EUROPÄISCHE PATENTANMELDUNG

(11) **EP 0 889 648 A2**
(43) Veröffentlichungstag der Anmeldung: **07.01.1999**
(21) Anmeldenummer: 98111659.3
(22) Anmeldetag: 24.06.1998
(51) Int. Cl.: H04N 5/45

(54) **Verfahren und Schaltungsanordnung zur Bild-im-Bild Einblendung**

(30) Priorität: 30.06.1997 DE 19727807
(71) Anmelder: SIEMENS AKTIENGESELLSCHAFT, 80333 München (DE)
(72) Erfinder: Prange, Stefan Dr., 81476 München (DE); Brett, Maik, 65719 Hofheim a. TS (DE)

(57) **Zusammenfassung**

Bei einem Verfahren zur Erzeugung eines Einfügebildes EB zur Bild-im-Bild-Einblendung wird das einzublendende Bild in der einen Richtung mit einem festen Faktor, in der anderen Richtung mit einem Faktor, der von einer vorgebbaren Größe des Einfügebildes EB abhängt, verkleinert. Nach der Zwischenspeicherung in einem Bildspeicher 4 wird es auf diese vorgebbare Größe, in der das Einfügebild EB in einem Hauptbild eingeblendet werden soll, interpoliert.
Das Verfahren ermöglicht eine formatrichtige Einblendung des Einfügebildes EB unabhängig von der Fernsehnorm und der Bildseitenverhältnisse.

## Beschreibung

Die Erfindung betrifft ein verfahren zur Einblendung eines Einfügebildes in ein Hauptbild gemäß den Merkmalen des Oberbegriffs des Patentanspruches 1.

Die Erfindung betrifft zudem eine Schaltungsanordnung zur Durchführung des Verfahrens.

Ein solches Verfahren bzw. eine derartige Schaltungsanordnung kann in Geraten zur Videosignalverarbeitung, z. B. Fernsehgeräten, angewandt werden, bei denen auf dem Bildschirm in ein eigentliches Hauptbild ein weiteres Bild oder weitere Bilder eingeblendet werden sollen.
Ein solches Einfügebild läßt sich aus einem Fernsehbild durch Verkleinerung der Bildgröße gewinnen. Üblicherweise wird dieses Fernsehbild über einen anderen Kanal übertragen als das Hauptbild. Dies erlaubt dem Fernsehzuschauer, neben dem die Bildschirmfläche des Fernsehgerätes füllenden Programm eines ersten Kanals das Programm eines weiteren Kanals, das nur einen Teil der Bildschirmfläche einnimmt, zu betrachten. Das mit dem Kanal des Hauptbildes synchronisierte Einfügebild wird an der gewünschten Position des Hauptbildes eingefügt und zur Anzeige gebracht.

Zur Erzeugung von Einfügebildern sind bereits Verfahren und Schaltungsanordnungen bekannt. Dabei wird die gewünschte Bildgröße des Einfügebildes im Verhältnis zum Hauptbild über Faktoren in horizontaler und vertikaler Richtung bestimmt. Bei dem einzublendenden Fersehbild werden die Anzahl der Bildpunkte pro Zeile wie auch die Anzahl der Zeilen pro Bild zur Einstellung der Bildgröße um die genannten Faktoren vermindert. Das so gewonnene Bild mit verringerter Anzahl von Bildpunkten wird in einen Bildspeicher geschrieben und synchron mit dem Hauptbild ausgelesen.

Bei der Abtastung des verkleinerten Bildes zum Einschreiben in den Bildspeicher treten sogenannte Aliasing-Fehler auf, wenn im Bildsignal Anteile mit Frequenzen enthalten sind, die das Nyquistkriterium bezüglich der Frequenz des Einschreibetaktes nicht erfüllen. Vor der Reduzierung der Bildpunkte wird daher das Bild in einem Tiefpaß gefiltert. Die Einstellung von Bildformat, also dem Verhältnis der Seiten des Einfügebildes, und von Bildgröße erfolgt durch die Faktoren zur Reduzierung der Bildpunkte in horizontaler und vertikaler Richtung. Für ein Einfügebild mit demselben Seitenverhältnis wie das Hauptbild sind die Faktoren in beiden Richtungen gleich.

Nachteil hierbei ist, daß das wegen der Aliasing-Fehler eingesetzte Tiefpaßfilter bei einer gewählten Filtercharakteristik für alle Bildgrößen und daher bei verschiedenen Faktoren zur Reduzierung der Bildpunkte eingesetzt wird. Dabei muß ein Kompromiß zwischen Bildschärfe und Aliasing eingegangen werden, da das Filter nur für eine bestimmte Reduzierung optimal ausgelegt werden kann.
Lösungen, die unterschiedliche an die Faktoren zur Reduzierung der Bildpunkte angepaßte Filtercharakteristiken vorsehen, sind aufwendig.
Stets ist die Ausnutzung des Speicherbereichs des Bildspeichers von der Reduzierung der Bildpunkte abhängig. Der vorhandene Speicherbereich wird nur bei den Einfügebildern ausgeschöpft, die eine Bildgröße aufweisen, die der maximal vorgesehenen Bildgröße entspricht.

Ein weiterer Nachteil ist, daß eine Formatanpassung zur Darstellung von 4:3 Fernsehbildern auf 16:9 Fernsehbildern nur eingeschränkt möglich ist. Die Faktoren zur Reduzierung der Bildpunkte können zwar in horizontaler und vertikaler Richtung zwar unterschiedliche, jedoch nur ganzzahlige Werte annehmen. Bei bestimmten Bildgrößen ist durch die Formatanpassung ein Verlust von Bildinformationen unvermeidbar.

Eine Darstellung von einem aus einem Fernsehbild mit 525 Zeilen nach der NTSC-Norm gebildeten Einfügebild in einem Hauptbild mit 625 Zeilen nach der PAL-Norm ohne Seitenverhältnis-Fehler ist ohne zusätzlichen Aufwand nicht möglich.

Die Aufgabe der vorliegenden Erfindung besteht darin, diese Nachteile zu vermeiden. Insbesondere sollen bei allen Bildgrößen des Einfügebildes sämtliche Bildseitenverhältnisse möglich sein. Eine weitere Aufgabe besteht in der Angabe einer Schaltungsanordnung zur Durchführung des Verfahrens.

Erfindungsgemäß wird die Aufgabe betreffend das Verfahren durch die Merkmale des Patentanspruches 1 gelöst. Eine Schaltungsanordnung zur Durchführung des Verfahrens ist in Patentanspruch 8 angegeben.

Das erfindungsgemäße Verfahren verwendet einen konstanten, von der Bildgröße des Einfügebildes unabhängigen Faktor zur Reduzierung der Bildpunkte in einer Richtung. Das Anti-Aliasing-Filter kann auf den Faktor in dieser Richtung genau abgestimmt werden. Die Tiefpaßcharakteristik wird nicht verändert. Der Entwurf des Filters vereinfacht sich dadurch sehr.

Ein im Bildspeicher abgelegtes Bild weist stets dieselbe Breite auf. Die Größe des Bildspeichers wird in einer Richtung stets vollkommen ausgenutzt. Der Speicheraufbau kann besser der Bildgröße angepaßt werden.
Unabhängig von der Fernsehnorm können Bilder sämtlicher Bildgrößen und nahezu aller Bildseitenverhältnisse in das Hauptbild eingeblendet werden. Es ist also beispielsweise auch die formatrichtige Einblendung eines Bildes nach der NTSC-Norm, das zum Beispiel von einem Satellitenempfänger stammt, in ein Hauptbild nach der PAL-Norm möglich.

Das erfindungsgemäße Verfahren läßt sich aufgrund des zeilenweise Aufbaues eines Fernsehbildes besonders vorteilhaft einsetzen, wenn die Reduzierung der Bildpunkte in horizontaler Richtung fest vorgegeben wird. Eine Interpolation läßt sich dann in horizontaler Richtung einfacher und schneller durchführen, da in horizontaler Richtung benachbarte Bildpunkte zeitlich vor benachbarten Bildpunkten in vertikaler Richtung verfügbar sind und früher zur Anzeige gebracht werden können.

Besonders vorteilhaft ist es, wenn der Faktor zur Reduzierung der Bildpunkte, der von der vorgegebenen Größe des Einfügebildes abhängig ist, so gewählt wird, daß das einzublendende Bild bereits vor der Interpolation die Größe des Einfügebildes in vertikaler Richtung aufweist. Die gewünschte Größe des Einfügebildes muß dann nur in der horizontalen Richtung hergestellt werden.

Die Verwendung eines m/n-Interpolators erlaubt bei jeder Bildgröße die Einstellung eines nahezu beliebigen Bildseitenverhältnisses.

Das Verfahren läßt sich in Schaltungsanordnungen mit gewöhnlichen Bildspeichern anwenden und erlaubt eine sich beispielsweise an die Interpolation anschließende weitere Signalverarbeitung des Einfügebildes.

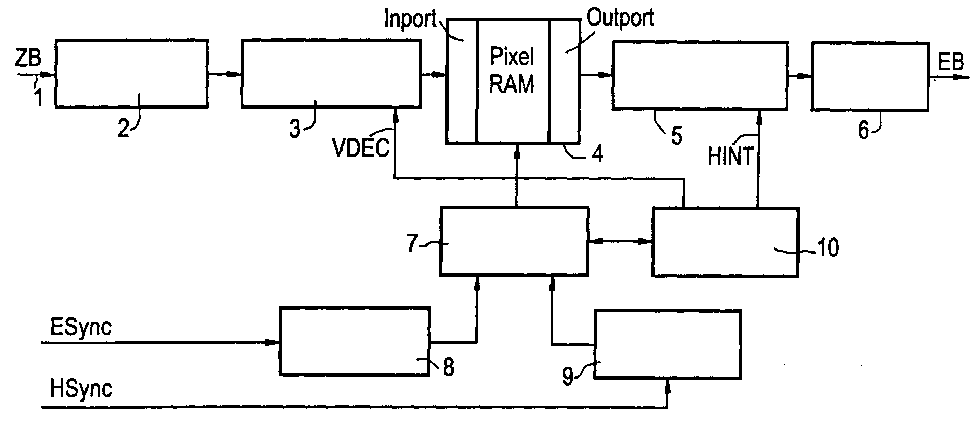

Nachfolgend wird die Erfindung anhand der in der Zeichnung dargestellten Figur ausführlich erläutert. Es zeigt die Figur:
ein Prinzipschaltbild einer Schaltungsanordung zur Durchführung des erfindungsgemäßen Verfahrens.

An einem Anschluß 1 der Schaltungsanordnung ist das Bildsignal für ein in ein Hauptbild einzublendendes Zweitkanalbild ZB zuführbar. Das Bildsignal wird aus dem Videosignal des zweitkanalbildes ZB nach Abtrennung der Synchronisierungssignale gewonnen und einem Horizontalfilter 2 zugeführt. Das Zweitkanalbild ZB wird beispielsweise über einen anderen Kanal oder von einer anderen Videoquelle geliefert als das Hauptbild oder ist mit diesem identisch. Es ist das Ausgangsbild zur Erzeugung eines Einfügebildes EB zur Einblendung in das Hauptbild.
Dem Horizontalfilter 2 ist ein Vertikalfilter 3 nachgeschaltet, das das ausgangsseitige Signal des Horizontalfilters 2 übernimmt.

Das Zweitkanalbild ZB ist in vertikaler Richtung aus Zeilen, die sich wiederum aus Bildpunkten zusammensetzen, aufgebaut. Im Horizontalfilter 2 wird das Zweitkanalbild zur Vermeidung von Aliasing-Fehlern in horizontaler Richtung tiefpaßgefiltert und danach mit einem festen horizontalen Reduktionsfaktor HDEC verkleinert. Das heißt, die Anzahl der Bildpunkte pro Zeile wird um den konstanten Reduktionsfaktor HDEC verringert. Der horizontale Reduktionsfaktor HDEC ist unabhängig von einer gewählten Größe, die das Einfügebild EB bei der Einblendung in das Hauptbild annehmen soll. Die Größe des Einfügebildes EB ist beispielsweise von einem Benutzer eines Fernsehgerätes, in dem das erfindungsgemäße Verfahren angewandt wird, bestimmbar.
Die Tiefpaßfilterung und Verkleinerung des Zweitkanalbildes ZB in vertikaler Richtung erfolgt im Vertikalfilter 3. Analog zum Horizontalfilter 2 dient es zur Vermeidung von Aliasing-Fehlern.
Die von einem vertikalen Reduktionsfaktor VDEC bestimmte Verkleinerung in vertikaler Richtung ist von der Größe des Einfügebildes EB bezogen auf die Größe des Hauptbildes abhängig. Eine Verkleinerung in vertikaler Richtung läßt sich durch Verminderung der Anzahl der Zeilen des Zweitkanalbildes ZB erreichen. Soll beispielsweise das Einfügebild EB in vertikaler Richtung nur halb so groß sein wie das Hauptbild, so ist der vertikale Reduktionsfaktor VDEC so zu bestimmen, daß die Anzahl der Zeilen halbiert wird.

Das Horizontalfilter ist hinsichtlich seiner Charakteristik optimal auf den fest eingestellten horizontalen Reduktionsfaktor HDEC abgestimmt.

Zwischen dem Ausgang des Vertikalfilters 3 und dem Eingang eines Horizontalinterpolators 5 befindet sich ein Bildspeicher 4. Das tiefpaßgefilterte Zweitkanalbild ZB wird im Bildspeicher 4 zwischengespeichert bis es mit dem Hauptbild synchronisiert ausgegeben wird. Die mittlere Taktrate, mit der der Bildspeicher 4 beschrieben wird, hängt von der Größe des Einfügebildes EB ab. Diese Taktrate muß umso höher sein, je kleiner der vertikale Reduktionsfaktor VDEC ist. Der Bildspeicher 4 hat eine Speichergröße, die erheblich unter dem Speicherbedarf eines nicht verkleinerten Zweitkanalbildes liegt. Durch die Verkleinerung des Zweitkanalbildes ZB wird also Speicherkapazität eingespart.

Im Horizontalinterpolator 5 wird das tiefpaßgefilterte Zweitkanalbild ZB durch Interpolation in horizontaler Richtung auf die vorbestimmte Größe und ein vorgegebenes Format gebracht. Die Größe kann dabei ein Teil des Hauptbildes sein, beispielsweise ein Viertel des Hauptbildes. Das Format ergibt sich aus dem Seitenverhältnis des Hauptbildes, beispielsweise 16:9 oder 4:3, oder aus einem Normausgleich zwischen der NTSC-Norm mit 525 Zeilen und der PAL-Norm mit 625 Zeilen. Entspricht zum Beispiel das Zweitkanalbild ZB der NTSC-Norm, muß sein Format bei einer Einblendung in ein PAL-Hauptbild angepaßt werden.
Die Interpolation erfolgt um einen Interpolationsfaktor HINT. Aus benachbarten Bildpunkten des aus dem Bildspeicher 4 ausgelesenen dezimierten Zweitkanalbildes ZB werden "neue" Bildpunkte berechnet, mit denen das verkleinerte Zweitkanalbild ZB auf die vorbestimmte Größe erweitert wird. Die "neuen" Bildpunkte sind so zu bestimmen, daß der ursprüngliche Bildinhalt bestmöglich wiedergegeben wird.

Zur Interpolation sind zahlreiche Verfahren bekannt. Sie sind jedoch nicht Gegenstand der vorliegenden Erfindung. Neben einer linearen Interpolation ist auch eine aufwendigere m/n-Interpolation einsetzbar. Mit einem m/n-Interpolator ist eine Interpolation mit gebrochen rationalen Faktoren möglich, um beispielsweise die Erhöhung der Anzahl der Bildpunkte des dezimierten Zweitkanalbildes ZB um das Anderthalbfache zu ermöglichen. Der Interpolationsfaktor HINT ergibt sich multiplikativ aus einem Faktor zur Bildgrößeneinstellung und einem Faktor zur Bildformatkorrektur.

Am Ausgang des Horizontalinterpolators 5 liegt das Bildsignal des Einfügebildes EB an. Es kann direkt zur Einblendung des Einfügebildes EB in das Hauptbild herangezogen werden oder einer weiteren Bildsignalverarbeitungsstufe 6 zugeführt werden.

Die Synchronisierung des Übertragungskanals des Einfügebildes EB mit dem Hauptkanal des Hauptbildes erfolgt über eine Lese/Schreib-Steuerung 7, die das Einschreiben des Zweitkanalbildes ZB in den Bildspeicher 4 und das Auslesen aus demselben steuert. Zu diesem Zweck werden der Schreib/Lese-Steuerung 7 ein Synchronisierungssignal des Einfügebildes ESync und ein Synchronisierungsssignal des Hauptbildes HSync über Signalverarbeitungsstufen 8, 9 zugeführt. Das Ausgangssignal der Schreib/Lese-Steuerung 7 wird dem Bildspeicher 4 zugeführt.
Eine Bildsteuerung 10 berechnet in Abhängigkeit von der vorbestimmten Größe und dem vorgegebenem Format des Einfügebildes EB den vertikalen Reduktionsfaktor VDEC und den Interpolationsfaktor HINT. Die Bildsteuerung 10 ist einerseits mit der Lese/Schreib-Steuerung 7, andererseits mit dem Vertikalfilter 3 und dem Horizontalinterpolator 5 verbunden.

In Fortführung des erfindungsgemäßen Verfahrens kann auch in vertikaler Richtung eine Verringerung der Bildpunkte des Zweitkanalbildes ZB vor dem Bildspeicher 4 um einen festen Faktor und eine variable Interpolation nach dem Bildspeicher 4 zur Größeneinstellung erfolgen. Die Größe des verkleinerten Zweitkanalbildes ZB, die dann vollkommen unabhängig von der Größe des Einfügebildes EB ist, bleibt konstant. Eine optimale Ausnutzung der Speichergröße ist dadurch möglich.

## Patentansprüche

1. Verfahren zur Erzeugung eines Einfügebildes EB, das in ein Hauptbild einblendbar ist, bei dem das Einfügebild EB aus einem Zweitkanalbild ZB, das in vertikaler und horizontaler Richtung aus Bildpunkten zusammengesetzt ist, durch Verringerung der Anzahl der Bildpunkte in wenigstens einer der Richtungen um einen der Richtung zugeordneten Reduktionsfaktor (HDEC/VDEC) gewonnen wird, **dadurch gekennzeichnet,** daß der Reduktionsfaktor (HDEC/VDEC) in einer Richtung fest vorgegeben wird und nach der Verringerung der Anzahl der Bildpunkte des Zweitkanalbildes das Einfügebild EB durch Interpolation in dieser Richtung (HDEC/VDEC) auf eine vorgegebene Größe eingestellt wird.

2. Verfahren nach Anspruch 1, **dadurch gekennzeichnet**, daß der Reduktionsfaktor (HDEC) in horizontaler Richtung vorgegeben wird und in horizontaler Richtung interpoliert wird.

3. Verfahren nach Anspruch 1 oder 2, **dadurch gekennzeichnet,** daß der Reduktionsfaktor (VDEC/HDEC) in der anderen Richtung abhängig von der vorgegebenen Größe gewählt wird.

4. Verfahren nach einem der Ansprüche 1 bis 3, **dadurch gekennzeichnet,** daß die Interpolation mit einem m/n-Interpolator durchgeführt wird.

5. Verfahren nach einem der Ansprüche 1 bis 4, **dadurch gekennzeichnet,** daß das verkleinerte Zweitkanalbild ZB in einem Bildspeicher zwischengespeichert wird.

6. Verfahren nach Anspruch 5, **dadurch gekennzeichnet,** daß der Bildspeicher mit unterschiedlichen Taktraten ein- und ausgelesen wird.

7. Verfahren nach einem der Ansprüche 1 bis 6, **dadurch gekennzeichnet,** daß nach der Interpolation das Einfügebild EB einer weiteren Signalverarbeitungsstufe 6 zugeführt wird.

8. Schaltungsanordnung zur Durchführung des Verfahrens nach einem der Ansprüche 1 bis 7 **gekennzeichnet durch**
- Mittel zur Verringerung der Anzahl der Bildpunkte eines in vertikaler und horizontaler Richtung aus Bildpunkten zusammengesetzten Zweitkanalbildes in wenigstens einer Richtung um einen der Richtung zugeordneten Reduktionsfaktor (HDEC/VDEC), einen Bildspeicher zur Zwischenspeicherung des Zweitkanalbildes mit verringerter Anzahl von Bildpunkten,
- Mittel zur Interpolation des im Bildspeicher zwischengespeicherten Zweitkanalbildes ZB in wenigstens einer Richtung zur Einstellung einer vorgegebenen Größe.
